# EUROPÄISCHE PATENTSCHRIFT

(11) **EP 1 272 254 B1**
(45) Veröffentlichungstag und Bekanntmachung des Hinweises auf die Patenterteilung: **01.02.2006**
(21) Anmeldenummer: 01931434.3
(22) Anmeldetag: 11.04.2001
(51) Int. Cl.: B01D 15/08, C08B 37/00, C08L 5/06

(54) **VERFAHREN ZUR GEWINNUNG VON WERTSTOFFEN AUS NEBENPRODUKTEN DER OBST- UND GEMÜSEVERARBEITUNG**
METHOD FOR OBTAINING USEFUL MATERIALS FROM THE BY-PRODUCTS OF FRUIT AND VEGETABLE PROCESSING
PROCEDE POUR LA PRODUCTION DE SUBSTANCES UTILES A PARTIR DE SOUS-PRODUITS DU TRAITEMENT DE FRUITS ET DE LEGUMES

(30) Priorität: 13.04.2000 DE 10018533
(43) Veröffentlichungstag der Anmeldung: 08.01.2003
(73) Patentinhaber: Herbstreith & Fox KG, Pektin-Fabrik, 75305 Neuenbürg (DE)
(72) Erfinder: CARLE, Reinhold, 72657 Altenriet (DE); KELLER, Petra, 73760 Ostfildern (DE); SCHIEBER, Andreas, 70619 Stuttgart (DE); RENTSCHLER, Christine, 75181 Pforzheim (DE); KATZSCHNER, Thomas, 70469 Stuttgart (DE); RAUCH, Dietmar, 51381 Leverkusen (DE); FOX, Gerhard, F., 75305 Neuenbürg (DE); ENDRESS, Hans-Ulrich, 75305 Neuenbürg (DE)
(74) Vertreter: Frank, Gerhard
(86) Internationale Anmeldenummer: PCT/DE2001/001426
(87) Internationale Veröffentlichungsnummer: WO 2001/078859

(56) Entgegenhaltungen:
- WO-A-99/48386
- FR-A- 2 773 150
- GB-A- 792 518
- US-A- 5 932 623

## Beschreibung

### Technisches Gebiet

Die vorliegende Erfindung betrifft ein Verfahren zur Gewinnung von Wertstoffen aus Nebenprodukten der Obst- und Gemüseverarbeitung. Bevorzugt wird Apfeltrester zur Gewinnung von Pektin und Polyphenolen als Wertstoffe herangezogen. Die Erfindung ist allerdings nicht auf Apfeltrester beschränkt.

Pektin (Pektine, Pektinstoffe) ist ein Polymer aus teilweise mit Methanol veresterten D-Galacturonsäuren, die durch α-(1-4)-glycosidische Bindungen aneinander gebunden sind. Ein Teil der Hydroxylgruppen kann acetyliert sein. Hemicellulose-Seitenketten verankern die Pektinmoleküle als wasserunlösliches Protopektin im Pflanzengewebe (Pilnik, W., Pektine. In: Heiss, R. (Hrsg.), Lebensmitteltechnologie. Springer, 1991, 228-234).

Die wirtschaftliche Bedeutung des Pektins beruht u.a. auf seinen strukturgebenden Eigenschaften. Als Gelier- und Verdickungsmittel in Konfitüren, Marmeladen und Fruchtzubereitungen wird Pektin schon seit Jahrzehnten genutzt. Auch zur Stabilisierung und Verdickung von sauren Milchprodukten und Salatsoßen wird Pektin eingesetzt. In Non-Food Produkten (Salben, Öle, Cremes) kann es zur Beeinflussung der Viskosität verwendet werden.

Als Rohmaterial zur Gewinnung von Pektin werden derzeit fast ausschließlich die Pressrückstände (Trester) der Apfel- und Citrussaftgewinnung verwendet. Enzymierter Trester ist zur Pektingewinnung nicht geeignet. In der Fruchtsaftverordnung ist für die Herstellung von Apfelsaft die Verwendung von reifen Äpfeln vorgeschrieben. Für die Pektingewinnung aus Trestern reifer Äpfel bedeutet dies bessere Qualität durch Pektine mit geringerem Stärkeanteil.

Um das in der Zellwand und in der Mittellamelle verankerte Pektin löslich zu machen, wird der Trester mit angesäuertem Wasser extrahiert, wobei die glycosidischen Bindungen der Seitenketten hydrolytisch gespalten werden. Das extrahierte Pektin wird anschließend vom Trester abgepresst und filtriert. Nach der Aufkonzentrierung erfolgt die Fällung des Pektins durch Zusatz von Alkohol. Das ausgefällte Pektin wird getrocknet, gemahlen und gesiebt.

Apfelpektin zeichnet sich durch seine besonders guten Geliereigenschaften aus. Durch seine bräunliche Eigenfarbe, die durch mitextrahierte Polyphenole verursacht wird, ist Apfelpektin für die Anwendung in hellen Produkten (z.B. Milchbereich) weniger geeignet. In hellen Produkten wird auf Citruspektin zurückgegriffen, dessen Rohware z.T. aus Süd- und Mittelamerika importiert wird.

Ein verstärkter Einsatz von Apfelpektinen in diesen Produkten setzt daher geeignete Methoden zu deren Enffärbung voraus.

Polyphenole sind Verbindungen, die an einem aromatischen Ringsystem eine oder mehrere OH-Gruppen tragen. Auch funktionelle Derivate der Phenole (z.B. Methylester, Ester oder Glycoside) werden den Phenolen im weiteren Sinne zugeordnet. Polyphenole werden mittels selektiver Adsorption und anschließender Desorption vom Adsorber gewonnen. Polyphenole werden als natürliche Antioxidantien in z.B. Lebensmitteln eingesetzt bzw, dienen als Zutaten in funktionellen Lebensmitteln (functional food).

Äpfel enthalten eine Reihe phenolischer Verbindungen, deren Gehalte von Sorte und Reifezustand sowie von Anbau-, Wachstums-, Ernte- und Lagerbedingungen abhängen. Wesentliche Bestandteile sind Hydroxyzimtsäure-Derivate, v.a. Chlorogensäure, Catechine, Procyanidine, diverse Flavonolglycoside sowie Phloretinglycoside. In Mostobst ist der Gehalt an Polyphenolen meist wesentlich höher ais in Tafelobst (Herrmann, K., Zur quantitativen Veränderung phenolischer Inhaltsstoffe bei der Gewinnung von Apfel- und Birnensäften. Flüssiges Obst 60, 1993, 7-10).

### Stand der Technik

Äpfel und daraus hergestellte Produkte sind hinsichtlich Gehalt und Veränderungen von Polyphenolen während Verarbeitung und Lagerung gut untersucht. Demgegenüber gibt es nur wenige Studien zu deren Zusammensetzung und Quantität in Apfeltrester. Lu & Foo (1997) extrahierten gefriergetrockneten Trester mit 70%iger wässriger Acetonlösung und fraktionierten den Extrakt an Sephadex LH-20 mit Wasser-Methanol-Gemischen. Hierdurch konnten zwar eine Reihe phenolischer Verbindungen isoliert und teils auch quantifiziert werden, Aussagen zur Verwertung der übrigen Tresterbestandteile und zum scale-up wurden jedoch nicht gemacht. Weiterhin kann das Verfahren von Lu & Foo (1997) nicht in den Prozess der Pektingewinnung integriert werden, sondern erfordert vieimehr eine gesonderte Behandlung des Apfeltresters.

Die Offenlegungsschrift 1692609 (1970) beschreibt ein Verfahren zur Entfärbung von Pektinextrakten bzw. Pektinkonzentraten. Diese werden mit einem Entfärbungsharz auf der Basis aromatischer Amine oder mit anderen hochporösen Entfärbungsharzen behandelt. Aufgrund der fehlenden Lebensmitteltauglichkeit des Entfärbungsharzes ist jedoch weder eine Verwendung des Pektins noch der Polyphenole möglich.

Die Patentanmeldung WO98/00453 beschreibt die Entfernung von Polyphenolen aus Flüssigkeiten durch Adsorption an einem piperazinamidhaitigen Polymer. Aufgrund der fehlenden Lebensmitteltauglichkeit des Entfärbungsharzes ist jedoch weder eine Verwendung des Pektins noch der Polyphenole möglich, so daß diese Erfindung lediglich die Entfernung der Polyphenole, nicht aber deren anschließende Gewinnung vorsieht.

Die Patentanmeldung GB 2317889 A beschreibt ein Verfahren zur Herstellung einer polyphenolhaltigen Zubereitung aus Trauben. Dieses Verfahren umfasst die Herstellung eines flüssigen polyphenolhaltigen Extrakts. Die Komponenten des Extrakts werden an einem Adsorberharz fraktioniert, anschließend wird die polyphenolhaltige Fraktion gewonnen. Dieses Verfahren sieht jedoch zum Einen nicht die gleichzeitige Gewinnung von Pektin vor, zum Anderen unterscheiden sich die in Trauben enthaltenen Polyphenole beträchtlich von denen in Äpfeln.

Die beiden Patentanmeldungen US 5,932,623 und US 5,994,413 nutzen unreife Rosaceen-Früchte (Apfel, Birne, Pfirsich etc.), die gepresst oder extrahiert werden. Vorzugsweise wird dem Extrakt ein nicht näher spezifiziertes pektolytisches Enzym zugesetzt. Die Gewinnung der Polyphenole erfolgt mittels eines Adsorberharzes. Da ausschließlich unreife Rosaceenfrüchte verwendet werden, die ansonsten keine wirtschaftliche Verwertung gestatten,wird hier nur an eine Gewinnung der enthaltenen Polyphenole gedacht.

Die vorgenannten Verfahren sind zwar allesamt in der Lage, Polyphenole adsorptiv aus verschiedenen Matrizes abzutrennen, teils werden, wie in US 5,932,623 bzw. US 5,994,413 beschrieben, sogar pektolytische Enzyme zugesetzt. Die Gewinnung von Polyphenolen unter Erhalt des Pektins sehen diese Verfahren jedoch nicht vor.

### Darstellung der Erfindung

Die Aufgabe der Erfindung besteht darin, die vorbekannten Verfahren in wirtschaftlicher und ökologischer Sicht wesentlich zu verbessern.

Diese Aufgabe wird gemäß den Merkmalen des Patentanspruchs 1 gelöst.

Der Erfindungsgedanke beruht auf der Erkenntnis,daß es wirtschaftlich und ökologisch sinnvoller ist, die Gewinnung von Wertstoffen in bereits etablierte Produktlinien zu integrieren,d.h.insbesondere, die Polyphenolgewinnung in den Prozess der Pektingewinnung zu integrieren.

Überraschenderweise lassen sich aus reifen Äpfeln sowohl Pektine als auch Polyphenole gewinnen. Dies führt nicht nur zu einer Entfärbung und damit zu einer Qualitätsverbesserung des Apfelpektins bei gleichbleibend hoher Gelierkraft, sondern auch zu einer weiteren Wertschöpfung durch die mit den Polyphenolen erzielte Nebenausbeute. Weiterhin stellt das Verfahren insofern einen bedeutenden Fortschritt dar, als durch die mit dem erfindungsgemäßen Verfahren bewirkte Entfärbung des Apfelpektins nunmehr für Apfelpektine auch diejenigen Anwendungspotentiale erschlossen werden können, die bislang Citruspektinen vorbehalten waren. Hierdurch enffällt ein Teil der Kosten für den Transport von Citruspektinen.

Mit einer alternativen Methode werden Polyphenole aus enzymiertem Trester, z.B. aus Nebenprodukten bei der Tafelobstverarbeitung, analog nach Extraktion adsorptiv gewonnen.Diese Variante wird ohne Gewinnung von Pektin durchgeführt mit dem Hauptziel der Gewinnung von Polyphenolen mit besonders wünschenswerten Eigenschaften aus reifen Früchten, beispielsweise Äpfeln.

### Beschreibung von Ausführungsbeispielen

### Beispiel 1 (Gewinnung von Polyphenolen und Pektin)

1000 ml Pektinextrakt werden über eine mit 26 ml Adsorberharz Amberlite XAD 16HP (Rohm u. Haas) befüllten Säule mit einer Flux von 10 Bettvolumen BV/h gefördert. Die Adsorption erfolgt bei 60°C. Die Säule wird zur Entfernung des auf der Säule befindlichen Pektins mit 2 BV Wasser gewaschen. Die Desorption der Polyphenole erfolgt mit 4 BV Methanol.

Das Pektin wird aus dem Pektinextrakt durch Fällung mit 80%igem Ethanol (3fache Menge) gewonnen. Das gefällte Pektin wird in reinem Alkohol nachgewaschen, anschließend getrocknet und gemahien.

Ausbeute, Farbwerte (gemessen mit Minolta Chroma-Meter CR 300) und Gelierkraft (USASag Standardmethode IFT, 1959) werden mit den Ergebnissen des Pektins verglichen, das aus nicht adsorberbehandeltem Extrakt unter gleichen Fällbedingungen gewonnen wurde:

| | ohne Behandlung mit Adsorberharz | nach Behandlung mit Adsorberharz |
|---|---|---|
| Pektinausbeute im Extrakt (1000 ml) | 10,8 g | 10,3 g |
| Farbwert getrocknetes Pektin | L 81,8 | L 86,5 |
| | a 3,3 | a 1,8 |
| | b15 | b9,6 |
| Farbwert 2,5%ige Pektinlösung | L 49,3 | L 57,1 |
| | a 4,0 | a 1,9 |
| | b 27,5 | b 12,6 |
| Gelierkraft | 183°USA-Sag | 185°USA-Sag |

Die Gewinnung des Polyphenolgehaltes im Eluat erfolgt nach Abtrennung des Methanols und anschließender Gefriertrocknung des Rückstandes. Der Polyphenolgehaft in der Pektinwürze beträgt 172,8 mg/l.

### Beispiel 2 (Gewinnung von Polyphenolen)

100 g Apfeltrester werden mit 1000 g Wasser versetzt, eine Stunde eingeweicht und anschließend im Küchenmixer zerkleinert. Nach Zugabe von 5,75 g Enzym (Pektinex 3XL und Peelzym IV, Novo Nordisk) wird die Maische 2 Stunden bei 25°C enzymiert. Nach Abpressen der Feststoffe werden die Polyphenole aus dem wässrigen Extrakt durch vierfache Extraktion mit 0,6facher Menge Ethylacetat gewonnen. Das Ethylacetat wird abgedampft und der Extrakt gefriergetrocknet. Der Gehalt an Polyphenolen im getrockneten, enzymierten Apfeltrester beträgt 1690 mg/kg.

Die Quantifizierung der beim Verfahren nach Beispiel 1 (bei Verwendung von Apfelpektinextrakt) oder Verfahren nach Beispiel 2 gewonnenen Apfel-Polyphenole erfolgt durch Hochleistungsflüssigkeitschromatographie mit Photodiodenarraydetektion (HPLC - DAD). Die gewonnen Apfel-Polyphenole sind im folgenden Chromatogramm und der folgenden Tabelle dargestellt:

| **Peak Nr.** | **Retentionszeit (min)** | **Verbindung** |
|---|---|---|
| 1 | 11.6 | (+)-Catechin |
| 2 | 12.8 | n-Chlorogensäure |
| 3 | 14.7 | Kaffeesäure |
| 4 | 17.2 | p-Cumaroyilchinasäure |
| 5 | 21.7 | p-Cumarsäure |
| 6 | 25.2 | Ferulasäure |
| 7 | 30.7 | Quercetin-3-rutinosid/Quercetin-3-galactosid |
| 8 | 31.5. | Quercetin-3-glucosid |
| 9 | 33.3 | Phloretin-2-xyloglucosid |
| 10 | 35.9 | Quercetin-3-rhamnosid |
| 11 | 36.9 | Phloretin-2-glucosid |
| 12 | 47.6 | Quercetin |

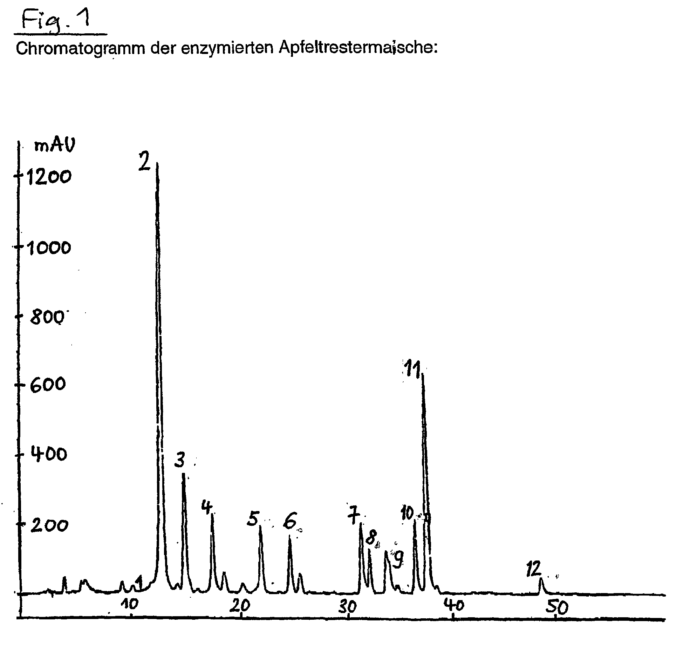

## Patentansprüche

1. Verfahren zur Gewinnung von Wertstoffen aus Nebenprodukten der Obst- und Gemüseverarbeitung,
**dadurch gekennzeichnet, dass** im Rahmen der Gewinnung von Pektin als erstem Wertstoff aus den Nebenprodukten mittels eines selektiven Adsorbers die in den Nebenprodukten enthaltenen Polyphenole als zweiter Wertstoff abgetrennt und durch anschließende Desorption vom Adsorber gewonnen werden.

2. Verfahren nach Anspruch 1, **dadurch gekennzeichnet, dass** bei der Saftherstellung aus reifen Früchten oder Gemüse anfallende Nebenprodukte verwendet werden.

3. Verfahren nach Anspruch 2, **dadurch gekennzeichnet, dass** die Nebenprodukte Apfeltrester oder Citrustrester sind.

4. Verfahren nach Anspruch 1, **gekennzeichnet durch** die Verwendung eines lebensmittelverträglichen Harzes als selektivem Adsorber.

5. Verfahren nach Anspruch 4, **dadurch gekennzeichnet, dass** als Adsorber ein synthetisches Polymer mit hoher Oberfläche, z.B. Styroldivinolbenzolharz oder vernetzte Polysaccaride verwendet werden.

6. Verfahren nach Anspruch 4, **dadurch gekennzeichnet, dass** die Adsorption in einem Pektinextrakt bei 10-100°C,bevorzugt 20°-70°C, bevorzugt 50°-60°C, erfolgt.

7. Verfahren nach Anspruch 1, **gekennzeichnet durch** die Verwendung eines Elutionsmittels bestehend aus Wasser und mindestens einem organischen Lösungsmittel.

8. Verfahren nach Anspruch 7, **gekennzeichnet durch** die Verwendung von Alkohol, insbesondere Methanol, als Lösungsmittel.

9. Verfahren nach Anspruch 7, **gekennzeichnet durch** die Verwendung von Aceton als Lösungsmittel.

10. Verfahren nach Anspruch 7, **gekennzeichnet durch** die Gewinnung der Polyphenole aus dem Eluat **durch** Trocknung, z.B. Sprühtrocknung oder Gefriertrocknung.

11. Verfahren nach Anspruch 7, **gekennzeichnet durch** die Gewinnung der Polyphenole aus dem Eluat **durch** Aufbringung auf ein inertes Trägermaterial.

12. Verfahren zur Gewinnung von Polyphenolen aus Obst oder Gemüse, insbesondere Äpfeln, **dadurch gekennzeichnet, dass** enzymierter Trester aus reifen Früchten verwendet wird, aus dem die Polyphenole nach Extraktion adsorptiv gewonnen werden.

13. Verwendung der gemäß Anspruch 1 oder Anspruch 12 gewonnenen Polyphenole als funktionelle Bestandteile in Lebensmitteln, insbesondere als Antioxidantien.

## Claims

1. Method for recovering useful substances from the by-products of fruit and vegetable processing, **characterised in that** when carrying out the recovery process of pectin from the by-products using a selective adsorber as the first useful substance, the polyphenols contained in the by-products are separated off as a second useful substance and are recovered from the adsorber by means of subsequent desorption.

2. Method according to claim 1, **characterised in that** by-products arising during the production of juice from ripe fruits or vegetables are used.

3. Method according to claim 2, **characterised in that** the by-products are apple pomace or citrus pomace.

4. Method according to claim 1, **characterised by** the use of a food-compatible resin as the selective adsorber.

5. Method according to claim 4, **characterised in that** a synthetic polymer with a high surface, for example styrene divinol benzol resin or cross-linked polysaccharide, is used as the adsorber.

6. Method according to claim 4, **characterised in that** the absorption is effected in a pectin extract at 10°-100°C, preferably at 20°-70°, preferably at 50°-60°C.

7. Method according to claim 1, **characterised by** the use of an elution agent comprising water and at least one organic solvent.

8. Method according to claim 7, **characterised by** the use of alcohol, more especially methanol, as the solvent.

9. Method according to claim 7, **characterised by** the use of acetone as the solvent.

10. Method according to claim 7, **characterised by** the recovery of the polyphenols from the eluate by means of drying, for example spray drying or freeze drying.

11. Method according to claim 7, **characterised by** the recovery of the polyphenols from the eluate by means of application onto an inert carrier substance.

12. Method for the recovery of polyphenols from fruit or vegetables, more especially apples, **characterised in that** enzymed pomace from ripe fruits is used, from which the polyphenols are recovered by adsorption after extraction.

13. Use of the polyphenols recovered according to claim 1 or claim 12 as operative components in food, more especially as antioxidants.

## Revendications

1. Procédé pour la production de substances utiles à partir de sous-produits du traitement de fruits et de légumes, **caractérisé en ce que**, dans le cadre de la production de pectine en tant que première substance utile à partir des sous-produits au moyen d'un adsorbeur sélectif, les polyphénols contenus dans les sous-produits sont séparés en tant que seconde substance utile et obtenus par désorption consécutive de l'adsorbeur.

2. Procédé suivant la revendication 1, **caractérisé en ce qu'**on utilise des sous-produits obtenus lors de la fabrication de jus à partir de fruits ou légumes mûrs.

3. Procédé suivant la revendication 2, **caractérisé en ce que** les sous-produits sont des marcs de pommes ou de citrus.

4. Procédé suivant la revendication 1, **caractérisé par** l'utilisation d'une résine compatible avec les produits alimentaires en tant qu'adsorbeur sélectif.

5. Procédé suivant la revendication 4, **caractérisé en ce qu'**un polymère de synthèse d'une surface élevée, par exemple résine de styrènedivinolbenzène ou polysaccharides réticulés, est utilisé en tant qu'adsorbeur.

6. Procédé suivant la revendication 4, **caractérisé en ce que** l'adsorption est effectuée dans un extrait de pectine à 10-100°C, de préférence à 20°-70°C, de préférence à 50°-60°C.

7. Procédé suivant la revendication 1, **caractérisé par** l'utilisation d'un éluant composé d'eau et d'au moins un solvant organique.

8. Procédé suivant la revendication 7, **caractérisé par** l'utilisation d'alcool, en particulier de méthanol, en tant que solvant.

9. Procédé suivant la revendication 7, **caractérisé par** l'utilisation d'acétone en tant que solvant.

10. Procédé suivant la revendication 7, **caractérisé par** la production des polyphénols à partir de l'éluat par séchage, par exemple séchage par pulvérisation ou lyophilisation.

11. Procédé suivant la revendication 7, **caractérisé par** la production des polyphénols à partir de l'éluat par application sur un matériau support inerte.

12. Procédé pour la production de polyphénols à partir de fruits ou de légumes, en particulier de pommes, **caractérisé en ce qu'**on utilise un marc enzymé de fruits mûrs, à partir duquel sont obtenus les polyphénols après extraction par adsorption.

13. Utilisation des polyphénols obtenus suivant l'une des revendications 1 et 12 en tant que composants fonctionnels dans des produits alimentaires, en particulier en tant qu'antioxydants.
